# FASCICULE DE BREVET EUROPEEN

(11) **EP 2 763 869 B1**
(45) Date de publication et mention de la délivrance du brevet: **05.04.2017**
(21) Numéro de dépôt: 12794485.8
(22) Date de dépôt: 08.10.2012
(51) Int. Cl.: B60L 5/42, B60M 1/36

(54) **ENSEMBLE D'ALIMENTATION ÉLECTRIQUE A ASSISTANCE À LA PRISE DE CONTACT ÉLECTRIQUE SUR UNE PISTE RÉCEPTRICE D'ALIMENTATION PORTÉE PAR UN VÉHICULE A PROPULSION ÉLECTRIQUE**
ELEKTRISCHE STROMVERSORGUNGSANORDNUNG MIT UNTERSTÜTZTER HERSTELLUNG EINES ELEKTRISCHEN KONTAKTES MIT EINER VON EINEM ELEKTRISCH ANGETRIEBENEN FAHRZEUG GETRAGENEN STROMSAMMELSCHIENE
ELECTRIC POWER SUPPLY ASSEMBLY WITH ASSISTED ESTABLISHMENT OF ELECTRICAL CONTACT WITH A POWER-COLLECTING TRACK CARRIED BY AN ELECTRICALLY POWERED VEHICLE

(30) Priorité: 06.10.2011 FR 1159049
(43) Date de publication de la demande: 13.08.2014
(73) Titulaire: NewTL, 67120 Ernolsheim sur Bruche (FR)
(72) Inventeur: ANDRE, Jean-Luc, F-67120 Molsheim (FR)
(74) Mandataire: Nuss, Laurent
(86) Numéro de dépôt international: PCT/IB2012/055434
(87) Numéro de publication internationale: WO 2013/050991

(56) Documents cités:
- WO-A2-2011/079215
- FR-A1- 2 942 750
- FR-A1- 2 957 861
- GB-A- 320 253

## Description

La présente invention se rapporte à un moyen d'assistance à la prise de contact pour un ensemble d'alimentation en énergie électrique par un bras distributeur d'un véhicule disposant sur son toit ou sur au moins un de ses flancs d'au moins une piste conductrice de réception de l'énergie électrique.

Ce type d'alimentation électrique d'un véhicule à propulsion électrique à partir d'un bras distributeur et d'une piste conductrice portée par le véhicule présente de nombreux avantages dont une économie en fil d'alimentation suspendu le long de la voie et en poteaux et ne nécessite que des infrastructures minimales prédisposant particulièrement ce type d'alimentation au transport urbain.

Ces avantages et intérêts sont amoindris par les difficultés liées à la prise de contact du bras d'alimentation électrique avec la piste conductrice portée par le véhicule.

En effet, pour des raisons électriques et mécaniques, la prise de contact de la pièce conductrice utilisée comme frotteur du bras distributeur avec la piste conductrice présente sur le toit ou le flanc du véhicule doit être franche et sans rebond tout en étant douce et amortie sans choc. Le véhicule arrivant sous le bras avec une certaine vitesse, l'avance de la rampe a tendance à le soulever. Il faut donc amortir la chute du bras pour éviter qu'à la retombée, le frotteur se casse à la prise de contact avec la piste conductrice.

De même, une fois le contact électrique établi, le frotteur ne doit pas décoller de la piste d'alimentation sous peine de créer des arcs électriques pouvant l'endommager. La piste d'alimentation n'est souvent pas parfaitement rectiligne, et le véhicule peut également avoir des rebonds dus au roulage sur la chaussée. Pour avoir le meilleur contact électrique possible, le bras doit osciller en un mouvement amorti qui lui permet d'éviter tout décollement intempestif.

Il faut aussi maitriser la force d'appui du frotteur sur la piste conductrice. Ainsi, en plus d'un amortisseur, l'invention prévoit aussi un ressort de compensation de charge.

On connaît également, par exemple par l'intermédiaire du document WO 2011/079215, une station d'alimentation électrique pour véhicule selon le préambule de la revendication 1, comprenant des frotteurs latéraux entre lesquels s'engage un rail conducteur du véhicule. Ces frotteurs latéraux présentent des portions déflectrices à l'avant, de manière à faciliter l'engagement du rail conducteur. La hauteur désirée des frotteurs latéraux par rapport au rail conducteur est obtenue et maintenue par exemple à l'aide d'une roue, solidaire du support des frotteurs latéraux et venant en contact avec le toit du véhicule. Le déplacement de la roue sur le toit du véhicule permet d'assurer un positionnement optimal en hauteur des frotteurs latéraux par rapport au rail conducteur. En effet, la roue doit rouler tout le long sur le toit et pendant toute la durée du contact électrique entre les frotteurs et le rail conducteur. Il est recherché de maintenir et de porter les frotteurs à une hauteur constante par rapport au toit du véhicule pour éviter une usure dommageable du dessous desdits frotteurs par frottement sur le toit. Une telle réalisation, adaptée spécifiquement à des frotteurs latéraux, ne permet pas d'éviter ou d'atténuer les chocs apparaissant lors de la prise de contact électrique entre lesdits frotteurs et le rail conducteur. Ces chocs ne sont pas négligeables notamment pour un véhicule arrivant à la station d'alimentation avec une vitesse pouvant aller jusqu'à 40 km/h ou 50 km/h.

La présente invention a pour but de remédier aux divers inconvénients ci-dessus en prévoyant un moyen d'accompagnement du mouvement d'élévation du bras, juste avant et lors de la prise de contact avec la piste conductrice..

Un objet de l'invention vise également à fournir un ensemble d'alimentation permettant d'atténuer au mieux les chocs générés lors d'un établissement d'une liaison électrique entre un véhicule et un bras de distribution d'énergie.

Les buts et objets assignés à l'invention sont atteints à l'aide d'un ensemble d'alimentation électrique d'un véhicule à propulsion électrique selon la revendication 1 portée par le

Selon un exemple de réalisation conforme à l'invention, la piste de déplacement est une rampe d'appui montante selon une direction allant de l'avant vers l'arrière véhicule. La rampe présente par exemple une forme incurvée, de préférence une forme bombée convexe.

Selon un exemple de réalisation conforme à l'invention, la piste de déplacement est montée sur le véhicule par l'intermédiaire d'une suspension.

Selon un exemple de réalisation conforme à l'invention, la piste de déplacement s'étend sur le véhicule sur une longueur limitée par rapport à la longueur de la piste conductrice, pour libérer l'élément de contact et d'appui temporaire de tout contact avec le véhicule dès l'établissement du contact électrique optimal entre la pièce de contact électrique et la piste conductrice.

Selon un autre exemple de réalisation conforme à l'invention, la piste de déplacement s'étend sur l'intégralité de la longueur de la piste conductrice, laquelle présente une élévation progressive et suffisante de sa surface supérieure de contact par rapport à ladite piste de déplacement, pour libérer ladite piste de déplacement de l'élément de contact et d'appui temporaire dès l'établissement du contact électrique optimal entre la pièce de contact électrique et la surface de contact supérieure de la piste conductrice.

Selon un exemple de réalisation conforme à l'invention, le bras est monté pivotant sur le poteau par une articulation en liaison avec un dispositif de suspension du bras.

Selon un exemple de réalisation conforme à l'invention, dispositif de suspension comprend avantageusement un ressort de compensation de charge et un amortisseur.

L'articulation de pivotement du bras sur le poteau est décalée transversalement au véhicule au-delà du poteau.

Selon un exemple de réalisation conforme à l'invention, l'élément de contact et d'appui comporte un organe de roulement du genre roulette ou galet, se déplaçant sur la piste de déplacement adjacente à la piste conductrice.

Selon un exemple de réalisation conforme à l'invention, l'élément de contact et d'appui comporte un organe de glissement du genre patin ou sabot se déplaçant par glissement sur la piste de déplacement adjacente à la piste conductrice.

Selon un exemple de réalisation conforme à l'invention, l'élément de contact et d'appui temporaire est placé à l'extrémité libre du bras.

Selon un exemple de réalisation conforme à l'invention, la roulette ou le galet est porté à roulement par le bras. La roulette (ou le galet) est montée par exemple de façon amortie ou flottante sur le corps du bras.

Selon un exemple de réalisation conforme à l'invention, le patin ou le sabot, est monté de façon amortie ou flottant sur le corps du bras.

Selon un exemple de réalisation conforme à l'invention, l'ensemble comprend deux bras de distribution électrique venant en contact chacun avec une piste conductrice existant sur chacun des côtés longitudinaux du toit ou sur chaque partie supérieure de chaque flanc du véhicule, chaque bras étant relié à une polarité de l'alimentation électrique du véhicule.

Le moyen d'accompagnement à la prise de contact mécanique et électrique comprend donc un ensemble d'assistance qui se particularise notamment par un moyen de roulement ou de glissement porté par le bras de distribution.

Ce moyen de roulement ou de glissement entre en contact avec une piste profilée de déplacement, adjacente à la piste conductrice avec laquelle la pièce de contact du moyen de roulement ou de glissement entre en contact et sur laquelle il roule ou glisse jusqu'à la prise de contact électrique du frotteur du bras de distribution avec la piste conductrice portée par le véhicule.

Dans le cas de deux lignes d'alimentation électrique ou pistes conductrices, portées par le véhicule, chacune sur un côté longitudinal de son toit ou sur chacun de ses flancs, on prévoit une piste attenante à chaque piste conductrice sur laquelle se déplace le moyen d'assistance de manière à disposer pour chaque bras, d'un contact électrique correspondant à une polarité de l'alimentation électrique.

Une piste de roulement ou de glissement analogue ou identique peut être prévue à l'autre extrémité du véhicule pour la ou chacune des pistes conductrices dans le cas d'une circulation bidirectionnelle.

On peut aussi imaginer une piste de roulement ou de glissement inclinée à l'extrémité arrière de la piste conductrice dans la zone où la barre conductrice quitte ou s'échappe de la piste conductrice.

D'autres caractéristiques et avantages de l'invention apparaîtront dans la description qui suit, donnée à titre d'exemple non limitatif et accompagnée des dessins dans lesquels :
- la figure 1 est une vue générale de face représentant un véhicule à propulsion électrique situé sous un bras d'alimentation en énergie électrique porté par un poteau le long de la voie ;
- la figure 2 est une vue en perspective de détail de la figure 1 centrée sur l'extrémité avant du véhicule et sur l'ensemble du bras d'alimentation en énergie électrique comportant le moyen d'assistance selon l'invention ;
- la figure 3 est une vue d'ensemble du bras d'alimentation en énergie électrique comportant le moyen d'assistance selon l'invention ;

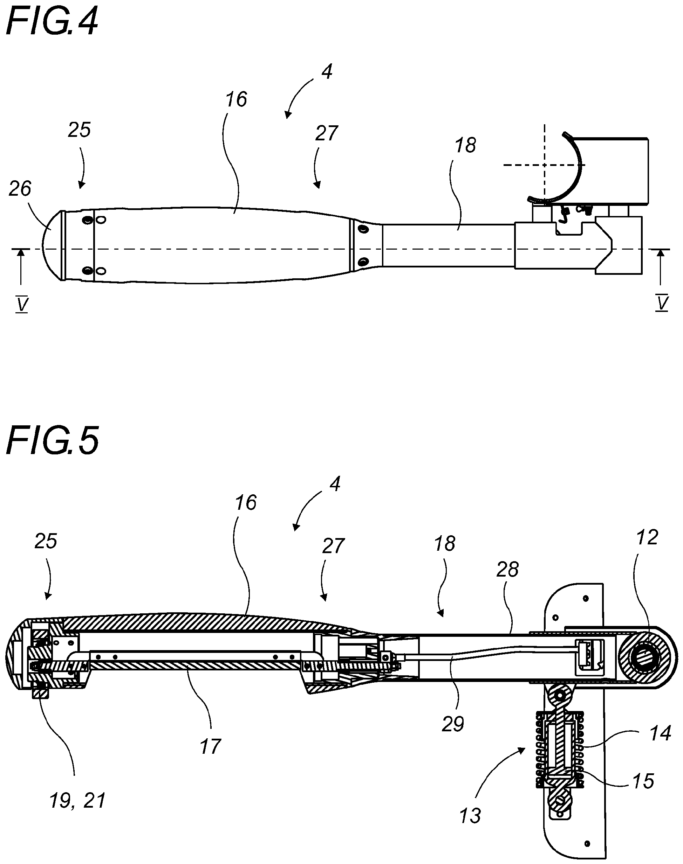

- la figure 4 est une vue de dessus du bras d'alimentation en énergie électrique comportant le moyen d'assistance selon l'invention ;
- la figure 5 est une vue en coupe longitudinale selon la ligne V-V de la figure 4 du bras d'alimentation en énergie électrique comportant le moyen d'assistance selon l'invention ;

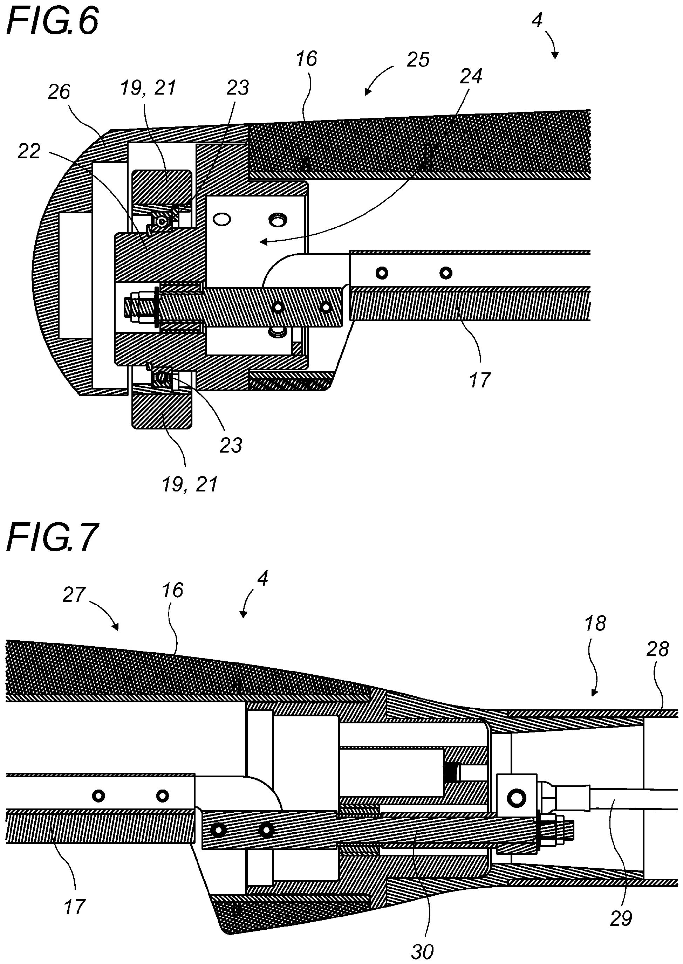

- la figure 6 est une vue de détail en coupe longitudinale de l'extrémité libre du bras d'alimentation en énergie électrique comportant le moyen d'assistance selon l'invention ;
- la figure 7 est une vue de détail en coupe longitudinale de l'autre extrémité du bras d'alimentation en énergie électrique comportant le moyen d'assistance selon l'invention ;
- la figure 8 est une vue partielle d'un exemple de réalisation de l'ensemble d'alimentation conforme à l'invention dans diverses positions lors de l'arrivée du véhicule ; et
- la figure 9 est une vue schématique de profil et partielle de l'ensemble d'alimentation de la figure 8.

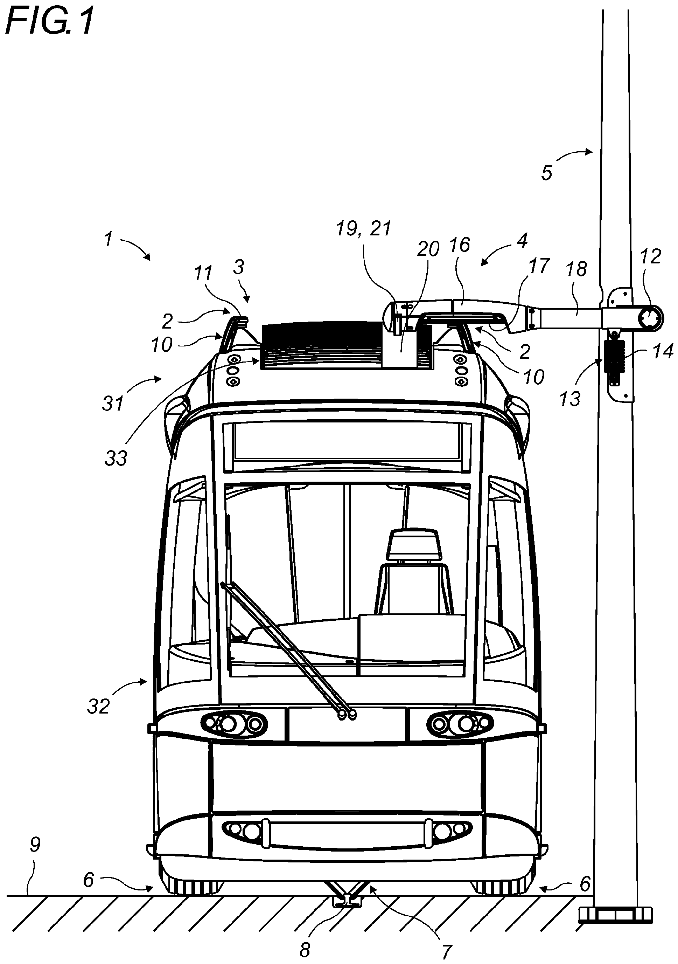

Comme représenté sur la figure 1, l'ensemble d'alimentation selon l'invention est destiné à alimenter électriquement un véhicule, par exemple un véhicule 1 de transport urbain à propulsion électrique portant au moins une piste conductrice longitudinale 2 sur son toit 3 ou sur au moins un de ses flancs. Cette piste est alimentée à partir d'une pluralité de bras distributeurs 4 monté chacun articulé sur un poteau 5 se répétant le long de la voie de circulation du véhicule 1.

Pour des raisons de simplification, on ne fera référence ci-après dans la description qu'à un seul bras 4.

Ce véhicule 1 de transport urbain peut être du type sur pneus 6 et guidé par un ensemble de guidage 7 le long d'un rail de guidage 8 fixé au sol 9.

La piste conductrice 2 est de préférence portée par un support 10 et se trouve sur la majorité de la longueur du véhicule, ce qui la met en élévation par rapport au plan du toit du véhicule 1. Elle peut aussi se trouver à une hauteur adaptée sur l'un ou l'autre ou les deux flancs du véhicule 1 à l'extrémité d'un support par exemple vertical.

La piste conductrice 2 présente une surface supérieure 11 sur laquelle porte la pièce de contact électrique du bras 4 pour l'alimentation en énergie électrique du véhicule 1.

Le bras 4 distributeur d'alimentation électrique apporte l'énergie électrique de propulsion au véhicule, mais il peut être prévu également un pantographe pour une alimentation conventionnelle à partir d'une caténaire (non représentée) sur les tronçons du trajet qui en sont ainsi équipés.

L'invention concerne l'ensemble perfectionné d'alimentation électrique par une pluralité de bras distributeurs 4 et plus particulièrement le moyen d'accompagnement ou d'assistance du bras distributeur 4 lors de la prise de contact avec la piste conductrice 2 qui lui est destinée sur le véhicule 1.

Le bras 4 distributeur est monté pivotant sur le poteau 5 par une articulation de pivotement 12.

Sur la réalisation représentée et donnée à titre d'exemple, l'articulation de pivotement 12 est déportée par rapport au poteau 5 et ceci transversalement au-delà du véhicule, de manière à minimiser l'amplitude des mouvements de déviation angulaire en extrémité du bras. Le même effet peut être obtenu par un poteau 5 plus éloigné transversalement du véhicule. Le but est de réduire les déviations angulaires en extrémité du bras.

Le moyen d'assistance à la prise de contact électrique optimal de l'ensemble d'alimentation conforme à l'invention comprend par exemple des éléments additionnels.

Ainsi, le bras 4 distributeur articulé à pivotement sur le poteau 5, repose sur un dispositif de suspension 13 comprenant un ressort de compensation de charge 14 et un amortisseur 15. Les caractéristiques du ressort 14 sont définies pour soulager le poids du bras afin que la pression du frotteur sur la piste conductrice 2 ne soit pas trop élevée ce qui entrainerait son usure précoce. A l'intérieur du ressort 14 est logé l'amortisseur 15 par exemple hydraulique, télescopique et à double effet. L'amortisseur 15 qui est réglé pour ne pas amortir, sans trop le freiner le bras 4 lors de son relevage à la prise de contact du moyen d'assistance avec sa piste de déplacement sur laquelle il porte. Il est réglé pour amortir la descente du bras sur la piste conductrice 2. Ce comportement est similaire à celui d'un essieu d'automobile sur une route défoncée.

L'amortisseur 15, tout comme le ressort de compensation 14 peuvent être réalisés sous d'autres formes, par exemple celle d'un amortisseur à frottement sec, d'un ressort de torsion ou autre. Ce dispositif de suspension 13 sert également à maintenir un contact franc qui évite les rebonds entre le frotteur et la piste d'alimentation, lors du déplacement du véhicule.

Le bras 4 distributeur, comporte une partie principale protégée par un carénage 16 ouvert vers le bas pour laisser dégagée une pièce conductrice 17 en forme de barre (appelée aussi frotteur), utilisée comme frotteur pour le contact mécanique et électrique avec la partie supérieure de la piste conductrice 2 et le déplacement de glissement le long de celle-ci en vue de la transmission de l'énergie électrique. Le frotteur 17 est de préférence monté en pivotement amorti autour d'un axe longitudinal du bras 4.

Le bras 4 distributeur se poursuit vers son articulation 12 avec le poteau 5 par une queue 18.

Selon l'invention, l'extrémité avant du bras 4 comporte un élément de contact et d'appui temporaire 19 participant à la prise de contact sous la forme d'un moyen de roulement ou de glissement se déplaçant sur une piste de déplacement 20 adjacente. Dans le cas d'un moyen de roulement, il peut s'agir par exemple d'une roulette ou d'un galet 21 qui forme un support d'appui temporaire roulant juste avant et pendant la prise de contact mécanique et électrique du frotteur 17 de distribution électrique avec la partie ou surface supérieure de la piste conductrice 2.

Dans le cas d'un moyen de glissement (non représenté), il peut s'agir d'un patin ou d'un sabot ou de toute autre pièce de glissement équivalente avançant par glissement la piste de déplacement 20piste adaptée, adjacente à la piste conductrice 2.

Comme représenté sur les figures, le moyen de roulement ou de glissement est prévu à l'extrémité du bras distributeur 4.

Dans le cas de la variante représentée, le galet 21 est monté sur un moyeu 22 par l'intermédiaire d'un roulement 23 porté par un ensemble mécanique 24 à l'extrémité libre 25 du bras. Cette extrémité 25 du bras 4 est protégée par un capot d'extrémité 26.

L'extrémité opposée 27 du bras 4 est une construction mécanique destinée à assurer la liaison avec l'articulation 12 reliant le bras 4 au poteau 5. Il s'agit d'un corps mécanique creux 28 abritant un câble 29 d'alimentation électrique assurant, à travers une liaison interne 30, la liaison électrique avec le système d'alimentation électrique au niveau du poteau 5. Ce corps creux 28 est terminé par l'articulation de pivotement 12 légèrement déportée par rapport au poteau 5 de manière à obtenir une longueur plus importante pour le bras en raison de l'amplitude des mouvements de déviation angulaire en extrémité du bras. Cette position est dépendante de celle du poteau 5 par rapport au véhicule. Le but est d'avoir un bras suffisamment long pour que l'angle que peut prendre le bras par rapport à la piste conductrice d'alimentation 2, dans tous les débattements verticaux possibles du véhicule, ne soit pas trop grand.

L'élément de contact et d'appui temporaire 19 du bras 4, prévu au voisinage de l'extrémité libre 25 du bras 4 contribue également la fonction d'amortisseur.

L'organe de roulement ou de glissement peut en effet être monté flottant ou suspendu du haut vers le bas par rapport au corps du bras 4 par exemple sous la forme d'un dispositif d'amortissement de préférence guidé (non représenté) qui présente une résistance élastique à l'enfoncement selon une course d'enfoncement progressive et amortie et en rappel élastique vers une position d'extension afin d'assurer la douceur nécessaire à la prise de contact et au roulement ou au glissement.

La piste de déplacement 20 sur laquelle se déplace l'élément de contact et d'appui temporaire 19, par exemple le galet 21, est prévue sur le véhicule 1 de façon adjacente à la piste conductrice 2. Ceci pour que cette pièce de roulement ou de glissement existant à l'extrémité du bras 4 puisse accompagner et assister progressivement ledit bras 4 avec son frotteur 17 lors du mouvement de prise de contact électrique avec la piste conductrice 2.

On peut utiliser à titre d'exemple, une partie de la zone supérieure 31 de l'avant 32 du véhicule 1 comme représenté sur les figures. Celle-ci présente avantageusement une surface bombée dont la concavité convexe est adaptée à la progressivité souhaitée pour la prise de contact du frotteur 17 avec la piste conductrice 2. Cette piste adjacente 20 peut avantageusement être prévue sur un capot 33, épousant par exemple la forme de la partie de la zone supérieure 31, servant de protection à un organe du véhicule, par exemple le compartiment où se trouve logé l'ensemble de climatisation.

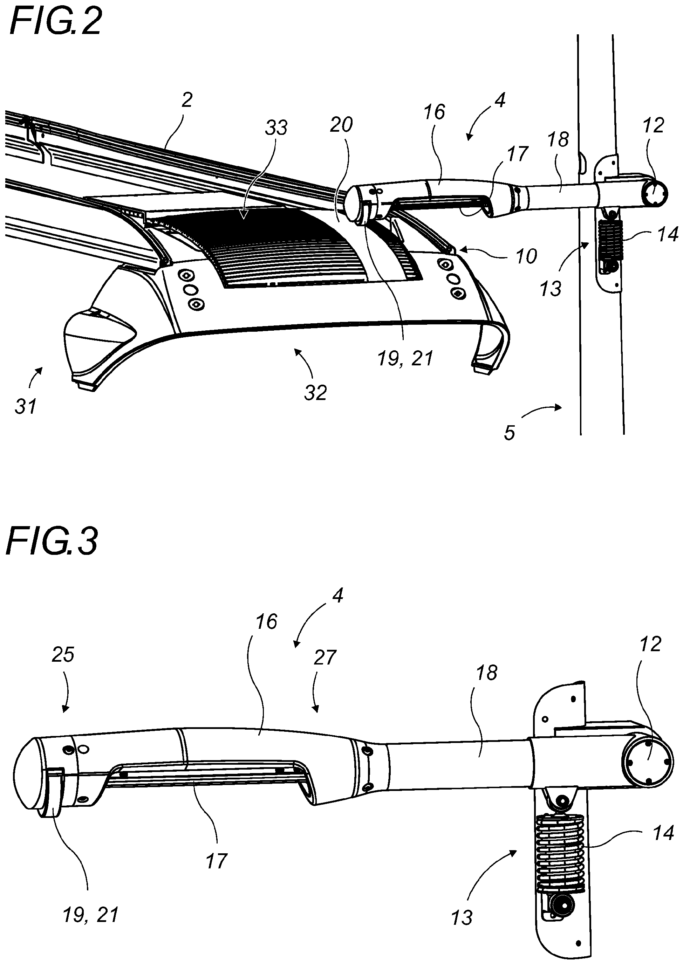

Elle est représentée aux figures 1 et 2, sous la forme d'une bande blanche.

La piste de déplacement 20 est de préférence montée suspendue sur le véhicule 1 pour filtrer les bruits de choc lors de la prise de contact du galet 21 ou du patin. La piste de déplacement 20 constituant une forme de rampe et la piste conductrice 2, présentent des formes adaptées pour que la charge du bras 4 supportée temporairement par le galet 21, soit progressivement reprise par le frotteur 17 glissant progressivement et se déplaçant sur la piste conductrice 2.

L'invention ne se limite pas à une seule piste conductrice et à un seul bras distributeur. Au contraire, il peut en exister deux pour respecter l'aspect bidirectionnel souvent demandé ou dans le cas d'un véhicule sur pneu non guidé, pour réaliser le retour du courant, qui dans le cas d'un véhicule guidé comme un tramway sur pneus, se fait par le rail de guidage.

On peut également envisager une piste conductrice sur l'un ou chacun des flancs du véhicule et ceci à une hauteur adaptée pour des raisons de sécurité.

Dans ce cas, le principe reste identique même avec un bras 4 latéral. Il suffit de prévoir une piste adjacente convenablement galbée sur laquelle porte et se déplace le moyen d'assistance.

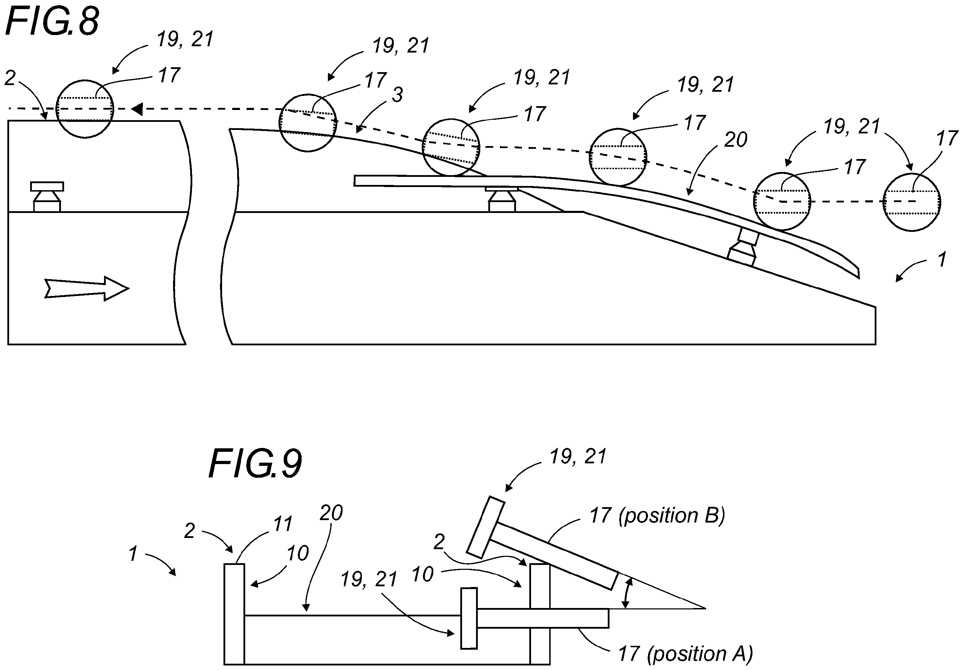

Le fonctionnement de l'invention s'avère relativement simple et peut être illustré par exemple par l'intermédiaire des figures 8 et 9.

La figure 8 montre un exemple de réalisation de l'ensemble d'alimentation conforme à l'invention dans lequel la piste de déplacement 20 se présente sous forme d'un segment de rampe galbée. La piste conductrice 2 présente au voisinage de la partie arrière de la piste de déplacement, une courbure montante prolongée par une portion sensiblement horizontale. La figure 8 montre également une succession de positions du galet 21, simulant l'avancée du véhicule 1 par rapport à l'ensemble d'alimentation.

Lorsque le frotteur 17 repose sur la surface supérieure de la piste conductrice 2 avec un contact électrique parfaitement assuré, le galet 21 se trouve au-delà de l'extrémité arrière de la piste de déplacement 20. Tout contact mécanique entre le galet 21 et la piste de déplacement 20 ou le toit du véhicule 1 est alors impossible.

Il en est de même pour une variante de réalisation de l'ensemble d'alimentation conforme à l'invention, dans laquelle la piste de déplacement 20 s'étend jusqu'à l'arrière du véhicule 1. Une élévation suffisante de la surface supérieure de la piste conductrice 2 par rapport à la piste de déplacement 20, permet alors d'éviter tout risque de contact mécanique du galet 21 avec ladite piste de déplacement 20.

A l'arrivée du véhicule vers le bras 4 distributeur, la première prise de contact s'effectue au niveau du moyen de roulement ou de glissement (galet 21) avec la piste de déplacement 20 que le bras 4 soit supérieur et horizontal ou latéral et vertical. Cette première prise de contact aura pour effet de soulever légèrement le bras 4 distributeur puis, grâce au dispositif de suspension du bras 4, à le maintenir en roulage ou frottement sur la piste de déplacement 20 à une élévation telle que le frotteur 17 n'entre pas en contact avec la piste conductrice 2. Cette première prise de contact est illustrée schématiquement à la figure 9 par la position A du frotteur 17.

Dans un deuxième temps, débutera une phase de rapprochement progressif à la fin de laquelle le frotteur 17 deviendra rasant pour finir tangent en prise de contact électrique et parfaitement parallèle, au moins localement au niveau du contact, avec la surface supérieure de la piste conductrice 2. Cette seconde prise de contact est illustrée schématiquement à la figure 9 par la position B du frotteur 17.

Avantageusement, le début galbé de la piste conductrice 2 est décalé longitudinalement vers l'arrière par rapport au début de la piste de déplacement 20 et ce d'une distance suffisante pour permettre une élévation suffisante du bras 4 assurant ainsi une prise de contact électrique optimale et une transition douce dans l'appui mécanique. L'appui mécanique passe ainsi sans chocs, d'un contact mécanique entre le galet 21 et la piste de déplacement 20 vers un contact mécanique entre le frotteur 17 et la piste conductrice 2.

Ce contact sera franc mais doux en raison de la force d'appui due au poids mort du bras soulagée par le ressort 14. Simultanément, la pièce de roulement ou de glissement du moyen de roulement ou de glissement d'assistance arrivera à la fin de sa course sur la piste adjacente 20. La force du ressort 14 du bras distributeur 4 pourra de suite s'appliquer pleinement. Toute cette phase de prise de contact se fera donc de façon progressive, brève et douce.

Les diverses variantes de réalisation décrites permettent de libérer l'organe de roulement ou de glissement du contact avec la piste de déplacement 20 dès que la prise de contact électrique optimale est réalisée. Le moyen d'assistance à la prise de contact électrique permet donc de pallier les inconvénients liés notamment aux chocs favorisant l'usure et la fragilisation des pièces constitutives de l'ensemble d'alimentation.

## Revendications

1. Ensemble d'alimentation électrique d'un véhicule (1) à propulsion électrique présentant au moins un bras (4) de distribution d'énergie électrique articulé sur un poteau (5) se répétant le long de la voie de circulation du véhicule, ensemble comprenant la pluralité de poteaux ainsi définie ainsi que la véhicule à propulsion électrique portant une piste conductrice longitudinale, le bras de chaque poteau étant relié électriquement à une alimentation électrique et équipé d'une pièce de contact électrique (17) utilisée comme frotteur sur la piste conductrice (2) longitudinale portée par le véhicule **caractérisé en ce que**, l'ensemble comprend pour chaque bras (4) associé à la piste conductrice (2) longitudinale, portée par le véhicule (1)
- un moyen d'assistance à la prise de contact électrique optimal entre la pièce de contact électrique (17) du bras (4) et la piste conductrice (2) portée par le véhicule (1), ce moyen faisant partie du bras (4) et comportant un élément de contact et d'appui temporaire, et en ce l'ensemble comprend
- une piste (20) de déplacement présente sur au moins une partie supérieure avant du véhicule (1), adjacente à la piste conductrice (2) et s'étendant sur au moins une portion de la longueur de la piste conductrice (2), chaque élément de contact et d'appui temporaire prenant appui et se déplaçant sur ladite piste de déplacement (20) au début du passage du véhicule (1) sous le bras (4) avant que la pièce de contact électrique (17) ne prenne appui sur ladite piste conductrice (2),
le poteau (5) étant répété le long de la voie de circulation du véhicule formant une succession de poteaux (5) de sorte que la piste conductrice (2) du véhicule (1) est en contact successif avec la pièce de contact électrique (17) du bras (4) respectif de chacun des poteaux (5).

2. Ensemble selon la revendication 1, **caractérisé en ce que** la piste de déplacement (20) est une rampe d'appui montante selon une direction allant de l'avant vers l'arrière du véhicule (1).

3. Ensemble selon une des revendications 1 ou 2, **caractérisé en ce que** la rampe présente une forme incurvée, de préférence une forme bombée convexe.

4. Ensemble selon l'une quelconque des revendications 1 à 3, **caractérisé en ce que** la piste de déplacement (20) est montée sur le véhicule (1) par l'intermédiaire d'une suspension.

5. Ensemble selon l'une quelconque des revendications 1 à 4, **caractérisé en ce que** la piste de déplacement (20) s'étend sur une longueur limitée sur le véhicule (1) par rapport à la longueur de la piste conductrice (2) pour libérer l'élément de contact et d'appui temporaire de tout contact avec le véhicule (1) dès l'établissement du contact électrique optimal entre la pièce de contact électrique (17) et la piste conductrice (2).

6. Ensemble selon l'une quelconque des revendications 1 à 4, **caractérisé en ce que** la piste de déplacement (20) s'étend le long de l'intégralité de la piste conductrice (2), laquelle présente une élévation progressive et suffisante de sa surface supérieure de contact par rapport à ladite piste de déplacement (20), pour libérer ladite piste de déplacement (20) de l'élément de contact et d'appui temporaire dès l'établissement du contact électrique optimal entre la pièce de contact électrique (17) et la surface supérieure de contact de la piste conductrice (2).

7. Ensemble selon l'une quelconque des revendications 1 à 6, **caractérisé en ce que** le bras (4) est monté pivotant sur le poteau (5) par une articulation (12) en liaison avec un dispositif de suspension (13) du bras (4).

8. Ensemble selon la revendication précédente **caractérisé en ce que** le dispositif de suspension (13) comprend un ressort (14) de compensation de charge et un amortisseur (15).

9. Ensemble selon une des revendications 7 ou 8 **caractérisé en ce que** l'articulation de pivotement (12) du bras sur le poteau (5) est décalée transversalement au véhicule au-delà du poteau (5).

10. Ensemble d'alimentation électrique selon l'une quelconque des revendications 1 à 9, **caractérisé en ce que** l'élément de contact et d'appui temporaire du moyen d'assistance est placé à l'extrémité libre du bras (4).

11. Ensemble d'alimentation électrique selon la revendication 1, **caractérisé en ce que** l'élément de contact et d'appui temporaire est un organe de roulement du genre roulette ou galet (21), se déplaçant sur la piste de déplacement (20) adjacente à la piste conductrice (2).

12. Ensemble d'alimentation électrique selon la revendication 11, **caractérisé en ce que** la roulette ou le galet (21) est porté à roulement, de façon amortie ou flottante, par le bras (4).

13. Ensemble d'alimentation électrique selon la revendication 1, **caractérisé en ce que** l'élément de contact et d'appui temporaire est un organe de glissement du genre patin ou sabot se déplaçant par glissement sur la piste de déplacement (20) adjacente à la piste conductrice (2).

14. Ensemble d'alimentation électrique selon la revendication 13, **caractérisé en ce que** le patin ou le sabot est porté de façon amortie ou flottante par le bras (4).

15. Ensemble d'alimentation selon l'une quelconque des revendications 1 à 14, **caractérisé en ce qu'**il comprend deux bras (4) de distribution électrique venant en contact chacun avec une piste conductrice (2) existant sur chacun des côtés longitudinaux du toit ou sur chaque partie supérieure de chaque flanc du véhicule (1), chaque bras (4) étant relié à une polarité de l'alimentation électrique du véhicule (1).

## Patentansprüche

1. Elektrische Stromversorgungseinheit eines Fahrzeugs (1) mit elektrischem Antrieb, welche wenigstens einen elektrischen Stromversorgungsarm (4) aufweist, welcher an einem Mast (5) angelenkt ist, welche sich entlang der Fahrspur des Fahrzeugs wiederholt, wobei die Einheit die Mehrzahl an so definierten Masten (5) sowie das Fahrzeug (1) mit elektrischem Antrieb umfasst, welches eine sich in Längsrichtung erstreckende Leiterbahn (2) trägt, wobei der Arm (4) eines jeden Mastes (5) mit einer Stromversorgung in elektrischer Verbindung steht und mit einem elektrischen Kontaktstück (17) ausgestattet ist, welches als Schleifstück an der von dem Fahrzeug (1) getragenen, sich in Längsrichtung erstreckenden Leiterbahn (2) dient, **dadurch gekennzeichnet, dass** die Einheit für jeden Arm (4), welcher mit der von dem Fahrzeug (1) getragenen, sich in Längsrichtung erstreckenden Leiterbahn (2) in Verbindung steht, umfasst:
- ein Hilfsmittel zur optimalen elektrischen Kontaktaufnahme zwischen dem elektrischen Kontaktstück (17) des Arms (4) und der von dem Fahrzeug (1) getragenen Leiterbahn (2), wobei das Hilfsmittel einen Teil des Arms (4) bildet und ein temporäres Kontakt- und Abstützelement aufweist,
und dass die Einheit umfasst:
- eine Bewegungsspur (20), welche an wenigstens einem vorderen oberen Abschnitt des Fahrzeugs an die Leiterbahn (2) angrenzend angeordnet ist und sich über wenigstens einen Teil der Länge der Leiterbahn (2) erstreckt, wobei sich jedes temporäre Kontaktund Abstützelement zu Beginn der Durchfahrt des Fahrzeugs (1) unter dem Arm (4) an der Bewegungsspur (20) abstützt und sich entlang dieser verlagert, bevor sich das elektrische Kontaktstück (17) an der Leiterbahn (2) abstützt,
wobei sich entlang der Fahrspur des Fahrzeugs wiederholende Mast (5) eine Abfolge an Masten (5) derart bildet, dass die Leiterbahn (2) des Fahrzeugs (1) nacheinander mit dem elektrischen Kontaktstück (17) des Arms (4) eines jeweiligen Mastes (5) in Kontakt tritt.

2. Einheit nach Anspruch 1, **dadurch gekennzeichnet, dass** die Bewegungsspur (20) von einer Stützrampe gebildet ist, welche von der Vorderseite des Fahrzeugs (1) in Richtung dessen Rückseite ansteigt.

3. Einheit nach Anspruch 1 oder 2, **dadurch gekennzeichnet, dass** die Rampe eine gekrümmte Form, vorzugsweise eine konvex gewölbte Form, aufweist.

4. Einheit nach einem der Ansprüche 1 bis 3, **dadurch gekennzeichnet, dass** die Bewegungsspur (20) mittels einer Aufhängung an dem Fahrzeug (1) montiert ist.

5. Einheit nach einem der Ansprüche 1 bis 3, **dadurch gekennzeichnet, dass** sich die Bewegungsspur (20) über eine gegenüber der Länge der Leiterbahn (2) begrenzte Länge auf dem Fahrzeug (1) erstreckt, um das temporäre Kontakt- und Abstützelement von der Herstellung des optimalen elektrischen Kontaktes zwischen dem elektrischen Kontaktstück (17) und der Leiterbahn (2) an von jeglichem Kontakt mit dem Fahrzeug (1) freizusetzen.

6. Einheit nach einem der Ansprüche 1 bis 4, **dadurch gekennzeichnet, dass** sich die Bewegungsspur (20) entlang der Gesamtheit der elektrischen Leiterbahn (2) erstreckt, welche ein progressives und hinreichendes Höhenniveau ihrer oberen Kontaktfläche in Bezug auf die Bewegungsspur (20) aufweist, um die Bewegungsspur (20) von der Herstellung des optimalen elektrischen Kontaktes zwischen dem elektrischen Kontaktstück (17) und der oberen Kontaktfläche der Leiterbahn (2) an von dem temporären Kontakt- und Abstützelement freizusetzen.

7. Einheit nach einem der Ansprüche 1 bis 6, **dadurch gekennzeichnet, dass** der Arm (4) mittels eines Gelenks (12) in Verbindung mit einer Aufhängeinrichtung (13) des Arms (4) schwenkbar am Mast (5) montiert ist.

8. Einheit nach dem vorangehenden Anspruch, **dadurch gekennzeichnet, dass** die Aufhängeinrichtung (13) eine Lastenausgleichsfeder (14) und ein Dämpfungsglied (15) aufweist.

9. Einheit nach Anspruch 7 oder 8, **dadurch gekennzeichnet, dass** das Gelenk (12) zum Anlenken des Arms (4) am Mast (5) in Bezug auf das Fahrzeug (1) jenseits des Mastes (5) in Querrichtung versetzt angeordnet ist.

10. Elektrische Stromversorgungseinheit nach einem der Ansprüche 1 bis 9, **dadurch gekennzeichnet, dass** das temporäre Kontakt- und Abstützelement des Hilfsmittels am freien Ende des Arms (4) angeordnet ist.

11. Elektrische Stromversorgungseinheit nach Anspruch 1, **dadurch gekennzeichnet, dass** das temporäre Kontakt- und Abstützelement von einem Rollkörper nach Art eines Laufrades oder einer Laufrolle (21) gebildet ist, welcher sich auf der an die Leiterbahn (2) angrenzenden Bewegungsspur (20) verlagert.

12. Elektrische Stromversorgungseinheit nach Anspruch 11, **dadurch gekennzeichnet, dass** das Laufrad oder die Laufrolle (21) in schwebender oder gedämpfter Weise rollfähig von dem Arm (4) getragen ist.

13. Elektrische Stromversorgungseinheit nach Anspruch 1, **dadurch gekennzeichnet, dass** das temporäre Kontakt- und Abstützelement von einem Gleitkörper nach Art einer Kufe oder eines Schuhs gebildet ist, welcher sich gleitend auf der an die Leiterbahn (2) angrenzenden Bewegungsspur (20) verlagert.

14. Elektrische Stromversorgungseinheit nach Anspruch 13, **dadurch gekennzeichnet, dass** die Kufe oder der Schuh in schwebender oder gedämpfter Weise von dem Arm (4) getragen ist.

15. Stromversorgungseinheit nach einem der Ansprüche 1 bis 14, **dadurch gekennzeichnet, dass** sie zwei elektrische Stromversorgungsarme (4) aufweist, welche jeweils mit einer an den beiden Längsseiten des Daches oder an den beiden oberen Abschnitten der beiden Seitenteile des Fahrzeugs (1) angeordneten Leiterbahn (2) in Kontakt treten, wobei jeder Arm (4) an eine Polung der elektrischen Stromversorgung des Fahrzeugs (1) angeschlossen ist.

## Claims

1. Electrical supply assembly for a vehicle (1) having electrical propulsion having at least one electrical energy distribution arm (4) which is articulated to a pole (5) which is repeated along the travel path of the vehicle, the assembly comprising the plurality of poles defined in this manner and the vehicle with electrical propulsion carrying a longitudinal conductor track, the arm of each pole being electrically connected to an electrical supply and provided with an electrical contact piece (17) which is used as a shoe on the longitudinal conductor track (2) which is carried by the vehicle, **characterised in that** the assembly comprises for each arm (4) associated with the longitudinal conductor track (2) which is carried by the vehicle (1),
- a means for assisting the optimum electrical contacting between the electrical contact piece (17) of the arm (4) and the conductor track (2) carried by the vehicle (1), this means being part of the arm (4) and comprising a temporary contact and abutment element, and **in that** the assembly comprises
- a movement track (20) which is present on at least one front upper portion of the vehicle (1), which portion is adjacent to the conductor track (2) and extends over at least a portion of the length of the conductor track (2), each temporary contact and abutment element abutting and moving on the movement track (20) at the beginning of the passage of the vehicle (1) below the arm (4) before the electrical contact piece (17) abuts the conductor track (2), the pole (5) being repeated along the travel path of the vehicle forming a succession of poles (5) so that the conductor track (2) of the vehicle (1) is in successive contact with the electrical contact piece (17) of the respective arm (4) of each of the poles (5).

2. Assembly according to claim 1, **characterised in that** the movement track (20) is an abutment ramp which rises in a direction from the front towards the rear of the vehicle (1).

3. Assembly according to either claim 1 or claim 2, **characterised in that** the ramp has an inwardly curved shape, preferably a convex curved shape.

4. Assembly according to any one of claims 1 to 3, **characterised in that** the movement track (20) is mounted on the vehicle (1) by means of a suspension.

5. Assembly according to any one of claims 1 to 4, **characterised in** the movement track (20) extends over a limited length on the vehicle (1) relative to the length of the conductor track (2) in order to release the temporary contact and abutment element from any contact with the vehicle (1) as soon as optimum electrical contact is established between the electrical contact piece (17) and the conductor track (2).

6. Assembly according to any one of claims 1 to 4, **characterised in that** the movement track (20) extends along all of the conductor track (2), which has progressive and sufficient elevation of the upper contact surface thereof relative to the movement track (20), in order to release the movement track (20) from the temporary contact and abutment element (20) as soon as optimum electrical contact is established between the electrical contact piece (17) and the upper contact surface of the conductor track (2).

7. Assembly according to any one of claims 1 to 6, **characterised in that** the arm (4) is pivotably mounted on the pole (5) by means of an articulation (12) which is connected to a suspension device (13) of the arm (4).

8. Assembly according to the preceding claim, **characterised in that** the suspension device (13) comprises a load compensation spring (14) and a damper (15).

9. Assembly according to either claim 7 or claim 8, **characterised in that** the pivoting articulation (12) of the arm on the pole (5) is offset transversely relative to the vehicle beyond the pole (5).

10. Electrical supply assembly according to any one of claims 1 to 9, **characterised in that** the temporary contact and abutment element of the assistance means is placed at the free end of the arm (4).

11. Electrical supply assembly according to claim 1, **characterised in that** the temporary contact and abutment element is a rolling member of the type of a small wheel or roller (21) which moves on the movement track (20) adjacent to the conductor track (2).

12. Electrical supply assembly according to claim 11, **characterised in that** the small wheel or roller (21) is carried for rolling, in a damped or floating manner, by the arm (4).

13. Electrical supply assembly according to claim 1, **characterised in that** the temporary contact and abutment element is a sliding member of the type of a runner or shoe which moves by means of sliding on the movement track (20) adjacent to the conductor track (2).

14. Electrical supply assembly according to claim 13, **characterised in that** the runner or the shoe is carried in a damped or floating manner by the arm (4).

15. Supply assembly according to any one of claims 1 to 14, **characterised in that** it comprises two electrical distribution arms (4) which each come into contact with a conductor track (2) which exists on each of the longitudinal sides of the roof or on each upper portion of each flank of the vehicle (1), each arm (4) being connected to a polarity of the electrical supply of the vehicle (1).
